# EUROPÄISCHE PATENTANMELDUNG

(11) **EP 4 659 881 A1**
(43) Veröffentlichungstag der Anmeldung: **10.12.2025**
(21) Anmeldenummer: 24180454.1
(22) Anmeldetag: 06.06.2024
(51) Int. Cl.: B23B 27/06

(54) **VERWENDUNG EINES GEWINDESCHNEIDBEREICHS ZUR GEWINDEERZEUGUNG, VERFAHREN ZUR GEWINDEERZEUGUNG UND GEWINDESCHNEIDWERKZEUG**

(71) Anmelder: Ceratizit Austria Gesellschaft m.b.H., 6600 Reutte (AT)
(72) Erfinder: Marth, Noel, 6600 Reutte (AT); Leitner, Daniel, 6600 Reutte (AT)
(74) Vertreter: Ciesla, Dirk

(57) **Zusammenfassung**

Verwendung eines Gewindeschneidbereichs (2) zur Gewindeerzeugung an einem Bauteil (30) mit mindestens einem sich entlang einer Längsachse (28) axial erstreckenden Zapfen (25) und einer Umfangswandung (26), die den Zapfen (25) umfänglich und radial beabstandet umgibt, so dass zwischen der Umfangswandung (26) und dem Zapfen (25) ein Freiraum (27) gebildet wird und der Zapfen (25) aus dem Freiraum (27) axial herausragt, wobei der Gewindeschneidbereich (2) einen zumindest abschnittsweise axial frei auskragenden vorderen Gewindeschneidzahn (3) zum axialen Eintauchen in den Freiraum (27) aufweist.

## Beschreibung

Die vorliegende Erfindung betrifft eine Verwendung eines Gewindeschneidbereichs zur Gewindeerzeugung, ein Verfahren zur Gewindeerzeugung und ein Gewindeschneidwerkzeug.

Die EP 3 892 405 A1 zeigt eine Gewindeschneidplatte bei der Erzeugung eines Außengewindes und damit eine Verwendung der Gewindeschneidplatte zur Gewindeerzeugung beziehungsweise ein Verfahren zur Gewindeerzeugung. Dabei besteht bezüglich eines sich von einer Bodenfläche axial erstreckenden und von einer Umfangswandung radial beabstandet umgebenden Zapfens das Bedürfnis, ein Außengewinde auf axialer Höhe einer Stirnseite der Umfangswandung zu Ende schneiden. So würde bei dem in der EP 3 892 405 A1 bekannten Verfahren und der bekannten Verwendung die gezeigte Gewindeschneidplatte mit einer solchen Umfangswandung stirnseitig kollidieren, wenn ein Außengewinde auf axialer Höhe dieser Stirnseite geschnitten wird. Folglich fällt die entlang des Zapfens oberhalb der Umfangswandung maximal erreichbare wirksame Gewindelänge kürzer aus und/oder muss die Umwandungswandung dünner gemacht werden, um in radialer Richtung mehr Platz zum Eintauchen der Gewindeschneidplatte in den Bereich der Umfangswandung zu schaffen. Ersteres führt jedoch dazu, dass die Schraubfunktion des Zapfens beeinträchtigt wird, sprich, die letzte Gewindeflanke außerhalb des Bereichs der Umfangswandung nicht mehr "sauber" geschnitten wird, zweiteres dazu, dass die Umfangswandung geschwächt wird.

Die Aufgabe der vorliegenden Erfindung besteht darin, eine Verwendung, ein Verfahren und ein Gewindeschneidwerkzeug bereitzustellen, mit denen die Nachteile des Stands der Technik überwunden werden.

Die technische Aufgabe der vorliegenden Erfindung wird gelöst durch den Gegenstand von Anspruch 1 und die Verwendung nach Anspruch 2. Vorteilhafte Weiterbildungen der Erfindung sind den von Anspruch 1 beziehungsweise 2 abhängigen Ansprüchen zu entnehmen, die untereinander frei kombinierbar sind.

Gemäß der vorliegenden Erfindung wird ein Gewindeschneidbereich zur Gewindeerzeugung an einem Bauteil mit mindestens einem sich entlang einer Längsachse axial erstreckenden Zapfen und einer Umfangswandung verwendet, wobei die Umfangswandung den Zapfen umfänglich und radial beabstandet umgibt, so dass zwischen der Umfangswandung und dem Zapfen ein Freiraum gebildet wird und der Zapfen aus dem Freiraum axial herausragt, wobei der Gewindeschneidbereich einen zumindest abschnittsweise axial frei auskragenden vorderen Gewindeschneidzahn zum axialen Eintauchen in den Freiraum aufweist. Der vordere Gewindeschneidzahn taucht also bei der Verwendung des Gewindeschneidbereichs in den Freiraum ein, um an dem unteren Zapfenabschnitt, der sich innerhalb des Freiraums befindet ein unteres Außengewindeabschnitt zu schneiden, womit ein üblicherweise durch den Gewindeschneidbereich bereits außerhalb des Freiraums geschnittener oberer Außengewindeabschnitt an dem Zapfen "sauber" zu Ende geschnitten wird, so dass der obere Außengewindeabschnitt jedenfalls auf axialer Höhe einer Stirnseite der Umfangswandung und damit am Übergang in den Freiraum endet. Der untere Außengewindeabschnitt wird dabei durch den axial frei auskragenden Gewindeschneidzahn erzeugt. Indem der Gewindeschneidbereich den zumindest abschnittsweise axial frei auskragenden vorderen Gewindeschneidzahn aufweist, wird eine Kollision des Gewindeschneidbereichs und/oder eines diesen tragenden Bereichs eines Gewindeschneidwerkzeugs mit der Umfangswandung beim Eintauchen des vorderen Gewindeschneidzahns in den Freiraum vermieden. Indem der vordere Gewindeschneidzahn zumindest abschnittsweise axial frei auskragend ausgebildet ist, ist der vordere Gewindeschneidzahn insoweit unterhöhlt und könnte sich im in den Freiraum eingetauchten Zustand mit der Umfangswandung verhaken, wenn der Gewindeschneidbereich in radialer Richtung von dem Zapfen wegbewegt wird.

Gemäß der vorliegenden Erfindung umfasst das Verfahren zur Gewindeerzeugung zumindest die Schritte: Bereitstellen eines Bauteils mit mindestens einem sich entlang einer Längsachse axial erstreckenden Zapfen und einer Umfangswandung, die den Zapfen umfänglich und radial beabstandet umgibt, so dass zwischen der Umfangswandung und dem Zapfen ein Freiraum gebildet wird; Bereitstellen eines Gewindeschneidbereichs, der einen zumindest abschnittsweise axial frei auskragenden vorderen Gewindeschneidzahn aufweist; Schneiden eines außerhalb des Freiraums befindlichen oberen Außengewindeabschnitts an dem Zapfen mit dem Gewindeschneidbereich; Schneiden eines mit dem oberen Außengewindeabschnitt verbundenen unteren Außengewindeabschnitts an dem Zapfen, indem der vordere Gewindeschneidzahn zumindest abschnittsweise in den Freiraum gewindeschneidend axial eingetaucht wird. Der obere Außengewindeabschnitt und der untere Außengewindeabschnitt bilden ein zusammenhängendes Außengewinde, dass sich entlang des Zapfens von außerhalb des Freiraums bis in den Freiraum hinein erstreckt. Durch den unteren Außengewindeabschnitt wird beim dem Verfahren und der beschriebenen Verwendung sichergestellt, dass der obere Außengewindeabschnitt zumindest bis an den Freiraum heran und damit in axialer Richtung bis an die axiale Position der Umfangswandung heran unter Einhaltung vorgegebener Gewindemaße und Toleranzen geschnitten wird; die Umfangswandung hat üblicherweise eine Stirnseite, die sich quer zur Längsachse erstreckt und eben ist. Wenn ein weiteres Bauteil mit einem Innengewindeabschnitt und einer zum stirnseitigen Kontaktieren der Umfangswandung ausgebildeten Auflageseite auf den Zapfen aufgeschraubt wird, kann die Auflageseite die Umfangswandung daher stirnseitig in einem besonders hohen Maß bündig kontaktieren; die Auflageseite erstreckt sich üblicherweise quer zur Längsachse, wenn das weitere Bauteil aufgeschraubt wird, und ist eben. Ohne den unteren Außengewindeabschnitt hätte der letzte Gewindegang des oberen Außengewindeabschnitts am axialen Übergang in den Freiraum hingegen eine schlechtere Qualität, weil das Schneiden des oberen Außengewindes kurz vor dem Erreichen des Freiraums beendet werden müsste und sich so ein Gewindeauslauf außerhalb des Freiraums bilden würde, und/oder würde weiter oberhalb von der Umfangswandung entfernt enden, also kürzer sein. Nach dem Verfahren und der beschriebenen Verwendung wird der Gewindeauslauf durch den unteren Außengewindeabschnitt in den Freiraum hinein verlegt. Dies wird dadurch ermöglicht, dass der vordere Gewindeschneidzahn zumindest abschnittsweise in den Freiraum gewindeschneidend axial eingetaucht wird. Indem der Gewindeschneidbereich den zumindest abschnittsweise axial frei auskragenden vorderen Gewindeschneidzahn aufweist, wird eine Kollision des Gewindeschneidbereichs und/oder eines diesen tragenden Bereichs eines Gewindeschneidwerkzeugs mit der Umfangswandung beim Eintauchen des vorderen Gewindeschneidzahns in den Freiraum vermieden. Indem der vordere Gewindeschneidzahn zumindest abschnittsweise axial frei auskragend ausgebildet ist, ist der vordere Gewindeschneidzahn insoweit unterhöhlt und könnte sich im in den Freiraum eingetauchten Zustand mit der Umfangswandung verhaken, wenn der Gewindeschneidbereich in radialer Richtung von dem Zapfen wegbewegt wird.

Der Fachmann versteht den Begriff "Gewindeschneidzahn" im Sinne der vorliegenden Offenbarung in sinnvoller Weise so, dass mit dem Gewindeschneidzahn ein üblicherweise genormtes Gewinde erzeugt werden kann, und kann damit den Gewindeschneidbereich von Schneidbereichen zum Abstechen und Einstechen unterscheiden. Der vordere Gewindeschneidzahn weist üblicherweise eine dreieckige oder trapezförmige Grundform auf.

Der Gewindeschneidbereich ist üblicherweise aus einem Hartmetall (englisch "cemented carbide") hergestellt, das Bauteil üblicherweise aus einer Metalllegierung, zum Beispiel ein Stahl. Der Gewindeschneidbereich kann weitere Gewindeschneidzähne aufweisen, die dem vorderen Gewindeschneidzahn nachfolgend bezüglich der Richtung des axialen Eintauchens in den Freiraum angeordnet sind. Beim Schneiden des oberen Außengewindeabschnitts und beim Schneiden des unteren Außengewindeabschnitts schneidet zumindest der vordere Gewindeschneidzahn den Zapfen, indem das Bauteil bezüglich der Längsachse relativ zu dem Gewindeschneidbereich gedreht und bezüglich der Längsachse relativ zu dem Gewindeschneidbereich axial bewegt wird, so dass der vordere Gewindeschneidzahn zunächst auf den Freiraum axial zubewegt und danach hinein getaucht wird. Der Zapfen ist bezüglich der Längsachse rotationssymmetrisch ausgebildet. Die Umfangswandung ist üblicherweise bezüglich der Längsachse rotationssymmetrisch ausgebildet.

Gemäß einer Weiterbildung der Verwendung beziehungsweise des Verfahrens ist der Gewindeschneidbereich ein monolithischer Teil einer Gewindeschneidplatte. Die Gewindeschneidplatte ist vorzugsweise aus einem Hartmetall hergestellt und wird üblicherweise reversible lösbar an einem Werkzeuggrundkörper gehaltert.

Gemäß einer Weiterbildung der Verwendung beziehungsweise des Verfahrens weist der vordere Gewindeschneidzahn eine axiale Auskraglänge auf, die 5 % bis 60 % von einer axialen Zahnbreite des vorderen Gewindeschneidzahns ausmacht. Wenn die axiale Auskraglänge 5 % bis 60 % von der axialen Zahnbreite des vorderen Gewindeschneidzahns ausmacht, wird ein Optimum zwischen einer hinreichenden Zahnstabilität und einer hinreichenden Eintauchtiefe in den Freiraums erreicht. Die axiale Zahnbreite und die axiale Auskraglänge werden parallel zur Längsachse bemessen. Vorzugsweise macht die axiale Auskraglänge 10 % bis 50 % von der axialen Zahnbreite aus, wonach der vordere Gewindeschneidzahn maximal bis zur axialen Zahnmitte des vorderen Gewindeschneidzahns axial frei auskragend ausgebildet ist.

Gemäß einer Weiterbildung der Verwendung beziehungsweise des Verfahrens ist der vordere Gewindeschneidzahn im Bereich der axialen Auskraglänge mit einem Materialsteg verbunden. Der Materialsteg dient als Fundament für den vorderen Gewindeschneidzahn, wo dieser axial frei auskragend ausgebildet ist. Üblicherweise ist der Materialsteg monolithisch mit dem vorderen Gewindeschneidzahn verbunden, zum Beispiel, indem der Gewindeschneidbereich Teil einer Gewindeschneidplatte aus zum Beispiel Hartmetall ist.

Gemäß einer Weiterbildung der Verwendung beziehungsweise des Verfahrens weist der Materialsteg eine entlang der Höhenerstreckung des vorderen Gewindeschneidzahns bemessene Steghöhe auf, die 10 % bis 95 % von der Höhenerstreckung ausmacht. Die Höhenerstreckung des vorderen Gewindeschneidzahns wird quer zur Auskraglänge bemessen. Wenn die Steghöhe 10 % bis 95 % von der Höhenerstreckung ausmacht, wird ein Optimum zwischen einer Zahnstabilisierung des vorderen Gewindeschneidzahns und einer in radialer Richtung beim Schneiden des unteren Außengewindeabschnitts hinreichend kleinen Gesamtabmessung des vorderen Gewindeschneidzahns und des Materialstegs erreicht, so dass in entsprechend radial relativ schmale Freiräume eingetaucht werden kann.

Gemäß einer Weiterbildung der Verwendung beziehungsweise des Verfahrens ist der vordere Gewindeschneidzahn bezüglich einer vorderen freistehenden Anschlagsfläche axial frei auskragend ausgebildet. Die Anschlagsfläche kann auf die Umfangswandung aufgesetzt werden und hat daher das Prädikat "freistehend". Der Anschlag der Anschlagsfläche mit der Umfangswandung begrenzt eine maximale Tiefe, die der vordere Gewindeschneidzahn in den Freiraum eingetaucht werden kann. Die Anschlagsfläche ist üblicherweise mit dem Gewindeschneidbereich monolithisch verbunden, zum Beispiel, indem beide Teil einer Gewindeschneidplatte aus zum Beispiel einem Hartmetall sind.

Gemäß einer Weiterbildung der Verwendung beziehungsweise des Verfahrens wird ein weiterer Gewindeschneidbereich bereitgestellt, der bezüglich des Gewindeschneidbereichs indexierbar ausgebildet ist. Der weitere Gewindeschneidbereich ist also dem Gewindeschneidbereich identisch ausgebildet, so dass identische Gewinde mit ihnen erzeugbar sind, wenn der weitere Gewindeschneidbereich in die Position und Lage des Gewindeschneidbereichs gebracht wird.

Gemäß einer Weiterbildung der Verwendung beziehungsweise des Verfahrens wird der Gewindeschneidbereich an einem Grundkörper reversibel lösbar gehaltert bereitgestellt, so dass sich der Gewindeschneidbereich im Bereich des vorderen Gewindeschneidzahns bei einer radialen Bewegung weg von dem Zapfen mit der Umfangswandung verhaken kann. In Aufsicht auf den Gewindeschneidbereich, der schneidaktiv angeordnet ist, wird dadurch ein Spalt zwischen dem Grundkörper und dem Gewindeschneidbereich gebildet, wobei sich der Spalt in radialer Richtung unterhalb des vorderen Gewindeschneidzahns bis zum Grundkörper erstreckt.

Gemäß einer Weiterbildung der Verwendung beziehungsweise des Verfahrens ist das Bauteil als Kabelgehäusebauteil ausgebildet. Hierbei kommt der Vorteil des durch das axiale Eintauchen des vorderen Gewindeschneidzahns in den Freiraum besser herstellbaren oberen Außengewindeabschnitts besonders gut zum Tragen. Denn bei einem Kabelgehäusebauteil ist es besonders wichtig, dass es mit dem erwähnten weiteren Bauteil bündig verschraubt werden kann, so dass das dann zusammengeschraubte Kabelgehäuse einen guten Kabelschutz vor äußeren Umwelteinflüssen bietet.

Die Aufgabe wird auch durch den Gegenstand von Anspruch 10 gelöst.

Das Gewindeschneidwerkzeug umfasst zumindest einen Gewindeschneidbereich mit einem vorderen Gewindeschneidzahn, wobei der Gewindeschneidbereich zumindest im Bereich dieses Gewindeschneidzahns axial frei auskragend ausgebildet ist. Damit werden die bezüglich des Verfahrens zur Gewindeerzeugung beschriebenen Vorteile analog realisiert. Das Gewindeschneidwerkzeug kann damit aus dem Gewindeschneidbereich bestehen oder zusätzlich einen Grundkörper umfassen, an dem der Gewindeschneidbereich gehaltert ist.

Gemäß einer Weiterbildung des Gewindeschneidwerkzeugs ist der Gewindeschneidbereich ein monolithischer Teil einer Gewindeschneidplatte. Damit werden die bezüglich der Verwendung des Gewindeschneidbereichs beschriebenen Vorteile die Gewindeschneidplatte analog realisiert.

Gemäß einer Weiterbildung des Gewindeschneidwerkzeugs weist der vordere Gewindeschneidzahn eine axiale Auskraglänge aufweist, die 5 % bis 60 %, vorzugsweise 10 % bis 50 %, von einer axialen Zahnbreite des vorderen Gewindeschneidzahns ausmacht. der Verwendung des Gewindeschneidbereichs beschriebenen Vorteile der Auskraglänge analog realisiert.

Gemäß einer Weiterbildung des Gewindeschneidwerkzeugs ist der vordere Gewindeschneidzahn im Bereich der axialen Auskraglänge mit einem Materialsteg verbunden. Damit werden die bezüglich der Verwendung des Gewindeschneidbereichs beschriebenen Vorteile des Materialstegs analog realisiert.

Gemäß einer Weiterbildung des Gewindeschneidwerkzeugs weist der Materialsteg eine entlang der Höhenerstreckung des vorderen Gewindeschneidzahns bemessene Steghöhe auf, die 10 % bis 95 % von der Höhenerstreckung ausmacht. Damit werden die bezüglich der Verwendung des Gewindeschneidbereichs beschriebenen Vorteile der Steghöhe analog realisiert.

Gemäß einer Weiterbildung des Gewindeschneidwerkzeugs ist der vordere Gewindeschneidzahn bezüglich einer vorderen freistehenden Anschlagsfläche axial frei auskragend ausgebildet, wobei die vordere freistehende Anschlagsfläche mit dem Gewindeschneidbereich monolithisch verbunden ist. Dadurch wird die vordere freistehende Anschlagsfläche spielfrei bezüglich des Gewindeschneidbereichs angeordnet.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen
- Fig. 1:: eine perspektivische Darstellung einer Gewindeschneidplatte;
- Fig. 2:: eine gegenüber Fig. 1 vergrößerte Darstellung eines vorderen Gewindeschneidzahns in Aufsicht;
- Fig. 3:: eine Darstellung der Gewindeschneidplatte nach Fig. 1 in Aufsicht auf eine Oberseite;
- Fig. 4:: eine Darstellung der Gewindeschneidplatte nach Fig. 1 in Aufsicht auf eine Unterseite;
- Fig. 5:: eine Längsschnittdarstellung eines Zapfens;
- Fig. 6:: eine Darstellung der Gewindeschneidplatte nach Fig. 1 bei einer Außengewindeerzeugung an dem in der Längsschnittdarstellung nach Fig. 5 gezeigten Zapfen;
- Fig. 7:: eine perspektivische Darstellung eines Gewindeschneidwerkzeugs;
- Fig. 8:: eine Darstellung einer weiteren Gewindeschneidplatte in Aufsicht auf eine Oberseite.

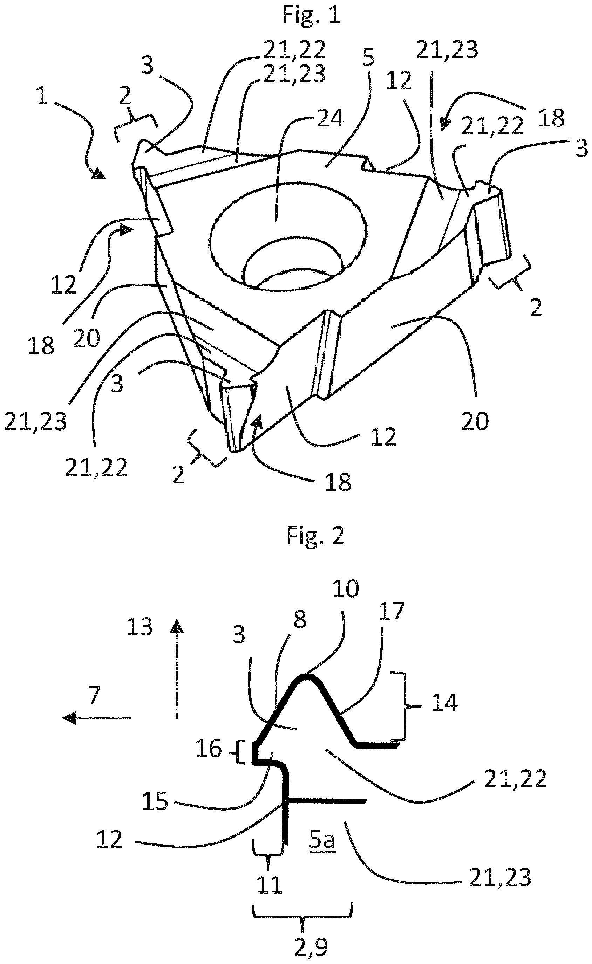

Unter Bezugnahme auf die Figuren 1 bis 6 wird eine Verwendung eines Gewindeschneidbereichs 2 und ein Verfahren zur Gewindeerzeugung beschrieben.

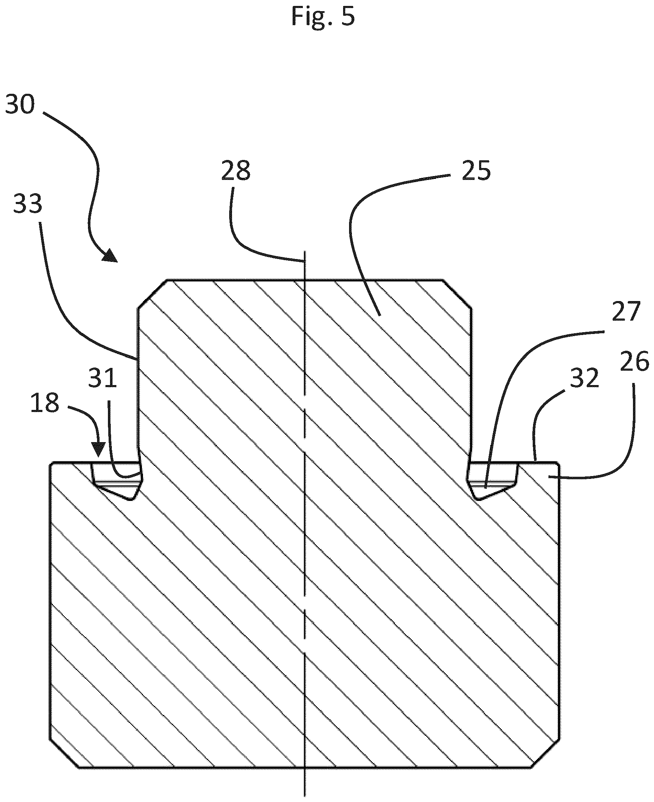

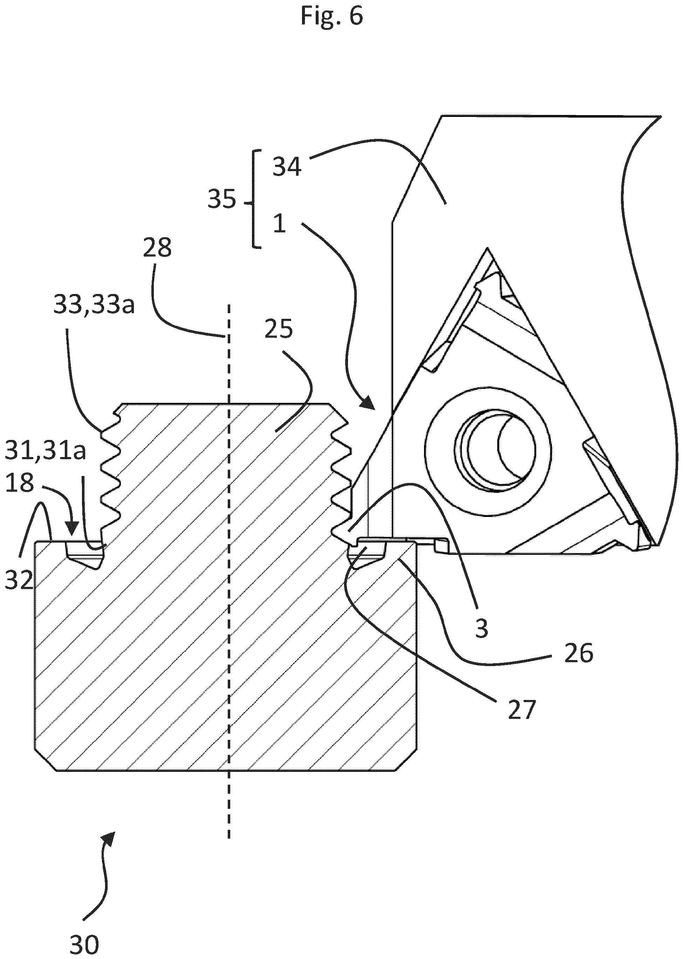

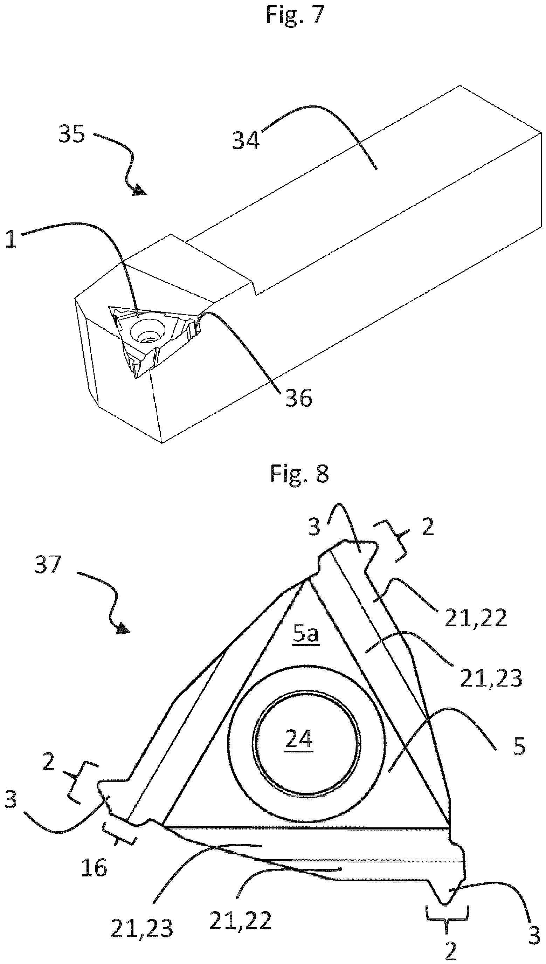

Bei der Verwendung des Gewindeschneidbereichs 2 beziehungsweise bei dem Verfahren werden der in den Figuren 1 bis 4 und 6 dargestellte Gewindeschneidplatte 1 und das in Fig. 5 dargestellte Bauteil 30 bereitgestellt. Die Gewindeschneidplatte 1 stellt eine Ausführungsform eines Gewindeschneidwerkzeugs 1 dar, wenn die Gewindeschneidplatte 1 gemäß Fig. 6 und 7 an einem Grundkörper 34 gehaltert wird, stellt dies eine zweite Ausführungsform eines Gewindeschneidwerkzeugs 35 dar.

Fig. 1 zeigt eine perspektivische Darstellung der Gewindeschneidplatte 1 mit einer zum Betrachter geneigten Oberseite 5. Die Gewindeschneidplatte 1 hat eine dreieckige Grundform, weil die Gewindeschneidplatte 1 bezüglich ihrer Oberseite 5 drei bezüglich einer 120° Drehung indexierbare Gewindeschneidbereiche 2 aufweist; denkbar und auch möglich ist es aber auch, dass die Gewindeschneidplatte 1 weniger, zum Beispiel einen Gewindeschneidbereich 2, oder mehr, zum Beispiel sechs Gewindeschneidbereiche 2, aufweist, wonach sich dementsprechend die Grundform die Gewindeschneidplatte 1 ändern würde. Die Oberseite 5 hat eine innere ebene Fläche 5a. Die Gewindeschneidbereiche 2 weisen jeweils einen vorderen Gewindeschneidzahn 3 mit einer dreieckigen Profilform auf; denkbar und auch möglich ist es aber auch, dass die Gewindeschneidbereiche 2 jeweils hinter dem vorderen Gewindeschneidzahn 3 einen oder mehr hintere Gewindeschneidzähne geringerer Zahnhöhe aufweisen, insbesondere dann, wenn der vordere Gewindeschneidzahn 3 ein Teilgewindeprofil erzeugt, welches durch den sukzessiven Eingriff der dann hinteren und sukzessiv kürzeren Gewindeschneidzähne oder auch nur jeweils eines hinteren Gewindeschneidzahns in ein Vollgewindeprofil geschnitten wird. Ferner ist es denkbar und auch möglich, dass die vorderen Gewindeschneidzähne 3 eine andere Profilform aufweisen, je nach einer vorgegebenen Gewindeprofilform, zum Beispiel bei einer trapezförmigen Gewindeprofilform eine trapezförmige Profilform. Der Fachmann versteht die Profilform der vorderen Gewindeschneidzähne aber jedenfalls so, dass mit ihnen in sinnvoller Weise ein Gewinde erzeugt werden kann, so dass er insoweit zwischen Gewindeschneidplatten und Platten zum Einstechen oder Abstechen unterscheiden kann.

Fig. 2 zeigt eine Detaildarstellung eines der vorderen Gewindeschneidzähne 3 für diese exemplarisch in Aufsicht auf die Oberseite 5. Fig. 2 zeigt damit besonders deutlich, dass der vordere Gewindeschneidzahn 3 in axialer Richtung 7, also die Richtung eines relativen axialen Vorschubs der Gewindeschneidplatte 1 beim Gewindeschneiden, also einer Gewindeerzeugung, im Bereich einer vorderen Gewindeflanke 8 des vorderen Gewindeschneidzahns 3, axial frei auskragt, also unterhöhlt ist.

Der vordere Gewindeschneidzahn 3 hat eine axiale Zahnbreite 9, die parallel zur axialen Richtung 7 bemessen ist. Dem vorderen Gewindeschneidzahn 3 ist eine axiale Auskraglänge 11 zugeordnet, die parallel zur axialen Richtung 7 bemessen und bezüglich einer vorderen freistehenden Anschlagsfläche 12 der Gewindeschneidplatte 1 definiert ist. Die axiale Auskraglänge 11 beträgt exemplarisch 30 % der axialen Zahnbreite 9, exemplarisch für den Bereich von 5 % bis 60 % und auch 10 % bis 50 % von der Zahnbreite 9. Wenn die axiale Auskraglänge 11 50 % von der axialen Zahnbreite 9 ausmacht, ist die vordere freistehende Anschlagsfläche 12 in Aufsicht auf die Oberseite 5 betrachtet mit der Spitze 10 des vorderen Gewindeschneidzahns 3 fluchtend; wenn der vordere Gewindeschneidzahn 3 zum Beispiel trapezförmig ist, würde die vordere freistehende Anschlagsfläche 12 bei einer Auskraglänge 11 von 50 % bezüglich der axialen Zahnbreite 9 mit dem Mittelpunkt der entsprechenden Trapezdachlinie fluchten. Der vordere Gewindeschneidzahn 3 ist bezüglich der vorderen freistehenden Anschlagsfläche 11 axial frei auskragend ausgebildet und mit dem Gewindeschneidbereich 2 monolithisch verbunden, wie zum Beispiel die Figuren 1 und 2 zeigen.

Fig. 2 zeigt ferner besonders deutlich, dass der vordere Gewindeschneidzahn 3 eine parallel zu einer radialen Richtung 13, also die Richtung einer radialen Zustellung, konstant oder variabel, bemessene Zahnhöhe 14 hat. Der vordere Gewindeschneidzahn 3 ist dabei exemplarisch mit einem Materialsteg 15 im Bereich der gesamten axialen Auskraglänge 11 verbunden. Der Materialsteg 15 stabilisiert den vorderen Gewindeschneidzahn 3 und hat eine parallel zur radialen Richtung 13 bemessene Steghöhe 16. Die Steghöhe 16 beträgt exemplarisch 33 % von der Zahnhöhe 14 und liegt damit im Bereich von 10 % bis 95 % von der Zahnhöhe 14. Der vordere Gewindeschneidzahn 3 hat ferner eine hintere Gewindeflanke 17. Die vordere Gewindeflanke 18 und die hintere Gewindeflanke 17 sind durch die Spitze 10 miteinander verbunden.

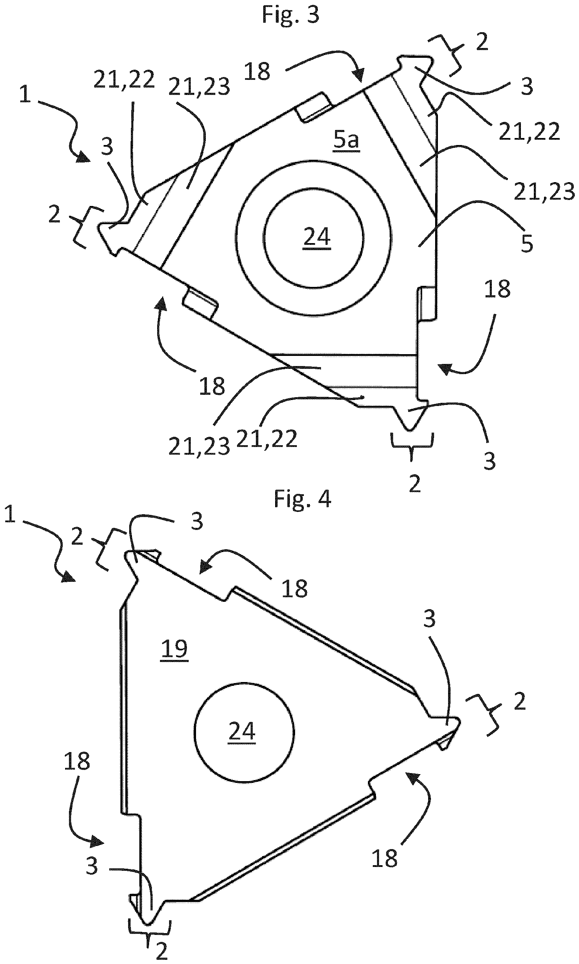

Wie Fig. 1 zum Beispiel zeigt, sind die vorderen Anschlagsflächen 12 jeweils durch einen Freistich 18 erzeugt worden, sprich, eines rillenförmigen Durchbruchs, der sich unterhalb des jeweiligen vorderen Gewindeschneidzahns 3 von der Oberseite 5 zur in Fig. 4 gezeigten ebenen Unterseite 19 der Gewindeschneidplatte 1 erstreckt und so die jeweilige Seitenfläche 20 der Gewindeschneidplatte 1 unterbricht; die Gewindeschneidplatte 1 hat der dreieckigen Grundform folgend drei Seitenflächen 20, die die Oberseite 5 mit der Unterseite 19 verbinden.

Fig. 1 zeigt ferner, dass den Gewindeschneidbereichen 2, die Teil der Gewindeschneidplatte 1 sind, jeweils aufseiten der Oberseite 5 ein ausgekehlter Bereich 21 zugeordnet ist, der in konvex gekrümmt ist und so eine Spanfläche 22 aufseiten der jeweiligen vorderen Gewindeschneidzähne 3 und eine an die Spanfläche 22 angeschlossene ansteigende Spanauslauffläche 23 bildet. Fig. 1 zeigt ferner, dass die Gewindeschneidplatte 1 eine zentrale Durchgangsbohrung 24 aufweist. Die Durchgangsbohrung 24 erstreckt sich von der Oberseite 5 zur Unterseite 19; denkbar und auch möglich ist es aber auch, dass die Gewindeschneidplatte 1 ohne Durchgangsbohrung 24 ausgebildet.

Fig. 3 stellt die Gewindeschneidplatte 1 in Draufsicht auf die Oberseite 5 analog zu Fig. 2 dar, jedoch insoweit vollständig, als dass alle Gewindeschneidbereiche 3 dargestellt werden. Fig. 4 zeigt die Gewindeschneidplatte 1 in Draufsicht auf die Unterseite 19. Die Unterseite 19 ist eben und zur Auflage auf einer Grundfläche eines Plattensitzes ausgebildet.

Fig. 5 stellt einen Zapfen 25 in einem Längsschnitt dar. Der Zapfen 25 ist von einer Umfangswandung 26 umfänglich und zu dieser radial beabstandet umgeben, so dass zwischen der Umfangswandung 26 und dem Zapfen 25 ein Freiraum 27 gebildet wird. Der Zapfen 25 und die Umfangswandung 27 sind Teil eines bezüglich einer Längsachse 28 rotationssymmetrischen Bauteils 29 und damit ebenfalls rotationssymmetrisch ausgebildet. Der Freiraum 27 wurde durch einen axialen Bauteileinstich 30 parallel zur Längsachse 28 erzeugt. Der Zapfen 27 hat einen unteren Zapfenabschnitt 31. Der untere Zapfenabschnitt 31 erstreckt sich innerhalb des Freiraums 28 und damit unterhalb einer Stirnseite 32 der Umfangswandung 26 aufseiten der Umfangswandung 26. Der Zapfen 27 hat ferner einen oberen Zapfenabschnitt 33, der aus dem Freiraum 27 herausragt. Der obere Zapfenabschnitt 31 erstreckt sich außerhalb des Freiraums 27 und damit oberhalb der ebenen Stirnseite 32 der Umfangswandung 26, wobei die ebene Stirnseite 32 quer zur Längsachse 28 erstreckt ist. Der untere Zapfenabschnitt 31 und der obere Zapfenabschnitt 33 werden in dem in Fig. 3 gezeigten Zustand jeweils ohne Außengewindeabschnitte bereitgestellt.

Die Figuren 1 bis 4 zeigen folglich die Gewindeschneidplatte 1 und damit die Gewindeschneidbereiche 2, so wie sie bei der Verwendung zur Gewindeerzeugung beziehungsweise dem Verfahren zur Gewindeerzeugung verwendet werden und Fig. 5 das Bauteil 30, so wie es bei dieser Verwendung und diesem Verfahren bereitgestellt wird.

Fig. 6 zeigt die Gewindeschneidplatte 1 und damit einen der Gewindeschneidbereiche 2, mit dem ein Außengewindeabschnitt 33a im Bereich des oberen Zapfenabschnitts 33 bereits geschnitten wurde, beim bezüglich der Längsachse 28 axialen Eintauchen im Bereich des vorderen Gewindeschneidzahns 3 in den Freiraum 27, so dass ein Außengewindeabschnitt 31a an dem unteren Zapfenabschnitt 31 geschnitten wird, so dass der obere Außengewindeabschnitt 31a "sauber" zu Ende geschnitten werden kann, bis an die axiale Position der Stirnseite 32 bezüglich der Längsachse 28 heran. In anderen Worten ausgedrückt wird der obere Außengewindeabschnitte 33a durch das Eintauchen des vorderen Gewindeschneidzahns 3, weil dieser axial frei auskragend ausgebildet ist, zu Ende geschnitten, wobei das Gewindeschneiden mit dem Gewindeschneidbereich 2 in den Freiraum 27 hinein fortgesetzt wird. Der untere Zapfenabschnitt 31a wird mit dem unteren Außengewindeabschnitt 31a versehen, wobei der untere Außengewindeabschnitt 31a den oberen Außengewindeabschnitt 33a auf axialer Höhe der Stirnseite 32 abschließt. Folglich kann ein weiteres Bauteil mit einem Innengewinde und einer für die Stirnseite 32 zum Kontaktieren dieser ausgebildeten Auflageseite im besonders hohen Maße mit dieser bündig aufgeschraubt werden. Andernfalls, also ohne Eintauchen des vorderen Gewindeschneidzahns 3 in den Freiraum 27, weil eine Kollision der Gewindeschneidplatte 1 mit der Umfangswandung 26 jedenfalls vermieden werden muss, würde der obere Außengewindeabschnitt 33a jedenfalls axial kurz oberhalb des Freiraums 27 enden, so dass der obere Außengewindeabschnitt 33a dementsprechend kurz oberhalb der Stirnseite 32 enden würde. Die Folge davon wäre, dass das erwähnte weitere Bauteil im deutlich geringeren Maße bündig auf das Bauteil 30 bezüglich der Stirnseite 32 aufgeschraubt werden könnte.

In Zusammenschau mit Fig. 2 wird deutlich, dass die vordere Gewindeflanke 8 in einen bereichsweise gewindeschneidenden Kontakt mit dem unteren Zapfenabschnitt 31 gebracht wurde, indem die Gewindeschneidplatte 1 im Bereich des vorderen Gewindeschneidzahns 3 in den Freiraum 18 bezüglich der Längsachse 28 axial eingetaucht wird. Dies ist dadurch möglich, dass der vordere Gewindezahn 3 und damit der Gewindeschneidbereich 2 axial frei auskragend ausgebildet sind, indem die Gewindeschneidplatte 1 die bezüglich Fig. 1 bis 4 beschriebenen Freistiche 18 aufweist, so dass die Gewindeschneidplatte 1 bis zu einem Anschlag der vorderen freistehenden Anschlagsfläche 12 mit der Stirnseite 32 in den Freiraum 27 axial eingetaucht werden kann.

Bei der Erzeugung der Außengewindeabschnitte 31a und 33a mit der Gewindeschneidplatte 1 wird das Bauteil 30 bezüglich der Längsachse 28 relativ zu der Gewindeschneidplatte 1 gedreht, wobei die Gewindeschneidplatte 1 unter einer konstanten oder variablen radialen Zustellung entlang der Längsachse 28 relativ zum Bauteil 30 axial bewegt wird.

Nach Fig. 6 ist die Gewindeschneidplatte 1 an einem Grundkörper 34 exemplarisch gehaltert, und zwar so, dass sich die Gewindeschneidplatte 1 bei einer radialen Bewegung weg von dem Bauteil 30 im Bereich des im Eingriff befindlichen vorderen Gewindeschneidzahns 3 mit der Umfangswandung 26 verhaken würde, wenn der vordere Gewindeschneidzahn 3, wie in Fig. 6 gezeigt, in den Freiraum 27 eingetaucht wird. Die Gewindeschneidplatte 1 und der Grundkörper 32 bilden ein Gewindeschneidwerkzeug 35, das in Fig. 6 aufseiten des Grundkörpers 34 abschnittsweise und in Fig. 7 in einer perspektivischen Darstellung vollständig gezeigt wird; die Gewindeschneidplatte 1 liegt mit der Unterseite 19 auf einem Plattensitz 36 des Grundkörpers 34 auf. Der Grundkörper 34 erstreckt sich exemplarisch quer zur in Fig. 2 gezeigten axialen Zahnbreite 9 des schneidaktiv angeordneten vorderen Gewindeschneidzahns 3, also der, der in Fig. 6 zum Gewindeschneiden verwendet wird oder kann, längserstreckt; denkbar und auch möglich ist aber auch eine andere Form und/oder Erstreckung des Grundkörpers 34.

Fig. 8 zeigt eine weiteren Gewindeschneidplatte 37 in einer Aufsicht analog zu Fig. 3. Die weitere Gewindeschneidplatte 37 ist der Gewindeschneidplatte 1 analog ausgebildet und kann daher in gleicher Weise die in Fig. 6 gezeigten Außengewindeabschnitte 31a und 33a erzeugen. Es werden daher im Vergleich zu der Gewindeschneidplatte 1 gleiche, ähnliche oder gleichwirkende Elemente mit identischen Bezugszeichen bezeichnet und eine wiederholte Beschreibung dieser Elemente wird in der nachfolgenden Beschreibung vermieden, um Redundanzen zu vermeiden.

Im Unterschied zu der Gewindeschneidplatte 1 sind die vorderen Gewindeschneidzähne 3 der Gewindeschneidplatte 37 nicht durch einen Freistich 18 axial frei auskragend ausgebildet. Die vorderen Gewindeschneidzähne 3 können damit in radialer Richtung tiefer in den Zapfen 25 beim Gewindeschneiden eindringen. Die Gewindeschneidplatte 37 hat ferner im Unterschied zu der Gewindeschneidplatte 1 eine größere Stegbreite 16, die etwa 90 % von der in Fig. 2 gezeigten Zahnhöhe 14 ausmacht.

Zusammenfassend zeigen die Fig. 1 bis 5 die Verwendung des Gewindeschneidbereichs 2 zur Gewindeerzeugung und ein Verfahren zur Gewindeerzeugung, Fig. 1 bis 4 ein Gewindeschneidwerkzeug in Form einer Gewindeschneidplatte 1, Fig. 5 und 6 ein Gewindeschneidwerkzeug 36, welches die Gewindeschneidplatte 1 und den Grundköper 34 umfasst. Bei der Verwendung und dem Verfahren kann die in Fig. 8 gezeigte weitere Gewindeschneidplatte 37 anstelle der Gewindeschneidplatte 1 analog verwendet und an dem Grundkörper 34 analog gehaltert werden.

Die Verwendung des Gewindeschneidbereichs 2 zur Gewindeerzeugung an dem Bauteil 30 mit dem mindestens einen sich entlang der Längsachse 28 axial erstreckenden Zapfen 25 und der Umfangswandung 26, die den Zapfen 25 umfänglich und radial beabstandet umgibt, so dass zwischen der Umfangswandung 26 und dem Zapfen 25 ein Freiraum 27 gebildet wird und der Zapfen 25 aus dem Freiraum 27 axial herausragt, wobei der Gewindeschneidbereich 2 den zumindest abschnittsweise axial frei auskragenden vorderen Gewindeschneidzahn 3 zum axialen Eintauchen in den Freiraum 27 aufweist. Durch dieses Eintauchen wird der untere Außengewindeabschnitt 31a erzeugt, so dass der obere Außengewindeabschnitt 33a, welcher üblicherweise ebenfalls durch den vorderen Gewindeschneidzahn 3 bei dieser Verwendung erzeugt wird, auf axialer Höhe der Stirnseite 32 enden, ohne dass der Gewindeschneidbereich 2 und damit die Gewindeschneidplatte 1 mit der Umfangswandung 26 kollidiert.

Das Verfahren zur Gewindeerzeugung umfasst zumindest die Schritte: Bereitstellen des Bauteils 30 mit mindestens dem sich entlang der Längsachse 28 axial erstreckenden Zapfen 25 und der Umfangswandung 26, die den Zapfen 25 umfänglich und radial beabstandet umgibt, so dass zwischen der Umfangswandung 26 und dem Zapfen 25 der Freiraum 27 gebildet wird und der Zapfen 25 aus dem Freiraum 27 axial herausragt; Bereitstellen des Gewindeschneidbereichs 2, der den einen zumindest abschnittsweise axial frei auskragenden vorderen Gewindeschneidzahn 3 aufweist; Schneiden des außerhalb des Freiraums 27 befindlichen oberen Außengewindeabschnitts 33a an dem Zapfen 25 mit dem Gewindeschneidbereich 2; Schneiden eines mit dem oberen Außengewindeabschnitt 31a verbundenen unteren Außengewindeabschnitts 31a an dem Zapfen 25 mit dem Gewindeschneidbereich 2, indem der vordere Gewindeschneidzahn 3 zumindest abschnittsweise in den Freiraum 27 gewindeschneidend axial eingetaucht wird.

Die Gewindeschneidplatten 1 und 37 können eine andere Grundform und/oder Indexierung, einschließlich keiner Indexierung, aufweisen, und könne auch ohne Materialsteg 15 ausgebildet sein, und sind vorzugsweise aus einem Hartmetall hergestellt. Die vorderen Gewindeschneidzähne 3 können eine andere Form und/oder axiale Auskraglänge 11 aufweisen. Das Bauteil 30 und damit der Zapfen 25 und die Umfangswandung 26 können andere als die in den Figuren 5 und 6 zu entnehmendem relativen Abmessungen aufweisen. Der Freiraum 27 kann sich tiefer oder flacher erstrecken und/oder eine andere Form aufweisen. Das Bauteil 30 ist vorzugsweise aus einer Metalllegierung, insbesondere einem Stahl hergestellt. Vorzugsweise weist das Bauteil 30 in dem in Fig. 5 gezeigten Längsschnitt eine sich bezüglich und entlang der Längsachse 28 erstreckende Durchgangsbohrung zur inneren Kabelführung auf, die sich damit entlang und im Inneren des Zapfens 25 erstreckt, so dass dadurch exemplarisch ein Kabelgehäusebauteil bereitgestellt wird.

## Patentansprüche

1. Verwendung eines Gewindeschneidbereichs (2) zur Gewindeerzeugung an einem Bauteil (30) mit mindestens einem sich entlang einer Längsachse (28) axial erstreckenden Zapfen (25) und einer Umfangswandung (26), die den Zapfen (25) umfänglich und radial beabstandet umgibt, so dass zwischen der Umfangswandung (26) und dem Zapfen (25) ein Freiraum (27) gebildet wird und der Zapfen (25) aus dem Freiraum (27) axial herausragt, wobei der Gewindeschneidbereich (2) einen zumindest abschnittsweise axial frei auskragenden vorderen Gewindeschneidzahn (3) zum axialen Eintauchen in den Freiraum (27) aufweist.

2. Verfahren zur Gewindeerzeugung, umfassend zumindest die Schritte: Bereitstellen eines Bauteils (30) mit mindestens einem sich entlang einer Längsachse (28) axial erstreckenden Zapfen (25) und einer Umfangswandung (26), die den Zapfen (25) umfänglich und radial beabstandet umgibt, so dass zwischen der Umfangswandung (26) und dem Zapfen (25) ein Freiraum (27) gebildet wird und der Zapfen (25) aus dem Freiraum (27) axial herausragt; Bereitstellen eines Gewindeschneidbereichs (2), der einen zumindest abschnittsweise axial frei auskragenden vorderen Gewindeschneidzahn (3) aufweist; Schneiden eines außerhalb des Freiraums (27) befindlichen oberen Außengewindeabschnitts (33a) an dem Zapfen (25) mit dem Gewindeschneidbereich (2); Schneiden eines mit dem oberen Außengewindeabschnitt (31a) verbundenen unteren Außengewindeabschnitts (31a) an dem Zapfen (25) mit dem Gewindeschneidbereich (2), indem der vordere Gewindeschneidzahn (3) zumindest abschnittsweise in den Freiraum (27) gewindeschneidend axial eingetaucht wird.

3. Verwendung nach Anspruch 1 oder Verfahren nach Anspruch 2, wobei der Gewindeschneidbereich (2) ein monolithischer Teil einer Gewindeschneidplatte (1) ist.

4. Verwendung nach Anspruch 1 oder 3 oder Verfahren nach Anspruch 2 oder 3, wobei der vordere Gewindeschneidzahn (3) eine axiale Auskraglänge (11) aufweist,
die 5 % bis 60 % von einer axialen Zahnbreite (9) des vorderen Gewindeschneidzahns (3) ausmacht.

5. Verwendung oder Verfahren nach Anspruch 4, wobei der vordere Gewindeschneidzahn (3) im Bereich der axialen Auskraglänge (11) mit einem Materialsteg (15) verbunden ist.

6. Verwendung oder Verfahren nach Anspruch 5, wobei der Materialsteg (15) eine entlang der Höhenerstreckung (14) des vorderen Gewindeschneidzahns (2) bemessene Steghöhe (16) aufweist, die 10 % bis 95 % von der Höhenerstreckung (14) ausmacht.

7. Verwendung nach einem der Ansprüche 1 oder 3 bis 6 oder Verfahren nach einem der Ansprüche 2 bis 6, wobei der vordere Gewindeschneidzahn (3) bezüglich einer vorderen freistehenden Anschlagsfläche (12) axial frei auskragend ausgebildet ist.

8. Verwendung nach einem der Ansprüche 1 oder 3 bis 7 oder Verfahren nach einem der Ansprüche 2 bis 7, wird ein weiterer Gewindeschneidbereich (2) bereitgestellt, der bezüglich des Gewindeschneidbereichs (2) indexierbar ausgebildet ist.

9. Verwendung nach einem der Ansprüche 1 oder 3 bis 8 oder Verfahren nach einem der Ansprüche 2 bis 8, wobei das Bauteil (30) als Kabelgehäusebauteil ausgebildet ist.

10. Gewindeschneidwerkzeug (35), umfassend zumindest einen Gewindeschneidbereich (2) mit einem vorderen Gewindeschneidzahn (3), wobei der Gewindeschneidbereich (2) zumindest im Bereich dieses Gewindeschneidzahns (3) axial frei auskragend ausgebildet ist.

11. Gewindeschneidwerkzeug (35) nach Anspruch 10, wobei der Gewindeschneidbereich (2) ein monolithischer Teil einer Gewindeschneidplatte (1) ist.

12. Gewindeschneidwerkzeug (35) nach Anspruch 10 oder 11, wobei der vordere Gewindeschneidzahn (3) eine axiale Auskraglänge (11) aufweist, die 5 % bis 60 % von einer axialen Zahnbreite (9) des vorderen Gewindeschneidzahns (3) ausmacht.

13. Gewindeschneidwerkzeug (35) nach Anspruch 12, wobei der vordere Gewindeschneidzahn (3) im Bereich der axialen Auskraglänge (11) mit einem Materialsteg (15) verbunden ist.

14. Gewindeschneidwerkzeug (35) nach Anspruch 13, wobei der Materialsteg (15) eine entlang der Höhenerstreckung (14) des vorderen Gewindeschneidzahns (3) bemessene Steghöhe (16) aufweist, die 10 % bis 95 % von der Höhenerstreckung (14) ausmacht.

15. Gewindeschneidwerkzeug (35) nach einem der Ansprüche 10 bis 14, wobei der vordere Gewindeschneidzahn (3) bezüglich einer vorderen freistehenden Anschlagsfläche (12) axial frei auskragend ausgebildet ist, wobei die vordere freistehende Anschlagsfläche (12) mit dem Gewindeschneidbereich (2) monolithisch verbunden ist.
